# EUROPEAN PATENT APPLICATION

(11) **EP 3 376 222 A1**
(43) Date of publication of application: **19.09.2018**
(21) Application number: 17161347.4
(22) Date of filing: 16.03.2017
(51) Int. Cl.: G01N 30/86

(54) **BASELINE CORRECTION FOR LIQUID CHROMATOGRAPHY / MASS SPECTROSCOPY**

(71) Applicant: Biotage AB, 751 03 Uppsala (SE)
(72) Inventor: Warngren, Anders, 756 52 Uppsala (SE)
(74) Representative: Brann AB

(57) **Abstract**

The present invention is a method and device for automated mass-directed separation of two or more components from a sample, which method comprises defining a solvent gradient by its changing composition; performing a blank injection of said solvent gradient to mass spectrometry (MS) to generate gradient signals; passing a gradient including at least a part of the defined gradient across a packed chromatography column to which a sample has been applied; subjecting the eluent exiting said column to MS to generate sample signals; generating a spectrum by subtracting the gradient signals from the sample signals across a selected range of m/z values; and directing a fraction collector to collect fractions each comprising a separated component based on the spectrum generated.

## Description

### Technical Field

The present invention relates to the area of separation, such as liquid chromatography. More specifically, the invention relates to a mass-directed method of efficiently separating components of a liquid or solid sample; an automated such method and a computer capable of executing the method; as well as a system for mass-directed separating components of a liquid or solid sample.

### Background

Many diagnostic and preparative methods includes the detection of organic molecules from liquid samples obtained e.g. from a subject subjected to testing, such as a blood or urine sample, or obtained from a process of synthesis and/or manufacture. Liquid chromatography is a well known and widely applied method for any preparative or diagnostic separation.

Flash chromatography is a chromatographic technique that has been used for decades, which uses a column or cartridge filled with an insoluble solid support, known as the stationary phase, and elution solvent mixture, known as the mobile phase, to separate and purify a mixture of organic compounds. The stationary phase and the mobile phase typically have very different polarities, which work in tandem to separate compound mixtures.

It is well-known in flash chromatography to use various non-destructive detectors, such as UV detectors, and/or destructive mass detectors, such as Evaporative Light Scattering Detectors (ELSD) or mass spectrometers (MS), to detect the separated molecules in the mobile phase and direct an automated fraction collector to collect the separated molecules in separate vials based on signals from the detectors.

The separated organic compounds may find subsequent use in various applications, such as synthesis or as a final product.

When mass spectrometers are used as detectors in automated flash chromatography, a total ion current (TIC) chromatogram is commonly generated and represents the summed intensity across the entire range of masses being detected at every point in the analysis. Alternatively, an extracted-ion chromatogram (XIC, sometimes denoted EIC) is generated, wherein one or more m/z values representing one or more analytes of interest are recovered from the entire data set for a chromatographic run. The total intensity or base peak intensity, within a mass tolerance window around a particular analyte's m/z value is plotted at every point in such XIC (EIC) analysis.

However, in complex samples, the information for individual species may be obscured by background noise primarily caused by the solvent in the resulting chromatogram. Thus, there is a need in this area to provide new methods with improved resolution. In conventional mass-directed flash chromatography, a preparation step preceding the actual separation is commonly performed in order to identify each mass of interest. However, this is a user intensive and time-consuming step.

US 2014/0312216 (Advion Inc.) relates to signal processing for mass-directed fraction collection, and more specifically to a method for removing noise from a mass spectrometer signal in order to improve collection of fractions of an eluent from a chromatography column. The method is described as broadly applicable to any form of liquid chromatography, as exemplified by reverse phase chromatography, normal phase flash chromatography and supercritical fluid chromatography. The patent application also describes a system for performing fraction collection wherein a raw signal is obtained by analyzing an eluent from a chromatography column by mass spectrometry; a baseline signal is calculated based on said raw signal; and a processed signal, which is used in the subsequent fraction collection, is generated by subtracting the baseline signal from the raw signal. Thus, the described noise reduction is achieved by an analysis performed on the eluent from the chromatography column and directly preceding the actual chromatographic separation of analytes, i.e. in the same chromatographic run. Thus, the proposed method is proposed for isocratic elution, and does not appear to be operable for gradient chromatography. Further, as the method presupposes that the noise reduction calculation is completed on pure solvent, it will be important to be aware of exactly when the analyte breakthrough into the eluent occurs. Consequently, the method proposed in US 2014/0312216 may be difficult to successfully apply to small scale chromatography columns.

### Summary of the invention

The present invention relates to a method of mass-directed separation of two or more components, which may provide improved resolution and hence improved fraction collection.

More specifically, the present invention may substantially reduce or even eliminate noise which is commonly caused by baseline drift due to solvent effects.

This may be achieved by a method wherein a solvent gradient defined for an intended separation is passed to a mass spectrometer in a step preceding an actual sample separation in order to determine a solvent noise level, which will be specific for each such solvent gradient.

Thus, the present invention may eliminate the need for commonly used time-consuming preparation steps for determination of the individual masses of each potentially interesting compound present in the sample.

In addition, in the method according to the present invention, the risk of sample impact on the detection of noise has been substantially eliminated.

### Definitions

A TIC (Total Ion Chromatogram) is a chromatogram created from the summed intensities across the entire range of masses being detected at every point in an MS analysis, as a plot of the total ion current vs. retention time. In conventional use, a TIC includes background noise as well as sample components.

In an extracted-ion chromatogram (XIC or EIC), one or more m/z values representing one or more analytes of interest are extracted from the entire data set for a chromatographic run.

### Detailed description of the invention

In a first aspect, the present invention relates to a method for automated mass-directed separation of two or more components of a sample by flash chromatography, which method comprises
a) defining a solvent gradient by its changing composition;
b) determining a solvent noise level by subjecting said solvent gradient to mass spectrometry (MS) and generating a plurality of gradient signals t₁, t₂, t₃ etc. across a predetermined range of m/z values;
c) separating two or more components of a sample by passing a solvent gradient which includes at least a part of the gradient defined according to step a) across a packed flash chromatography column to which the sample has been applied;
d) subjecting the eluent exiting said column to MS and generating a plurality of sample signals t'₁, t'₂, t'₃ etc. across a predetermined range of m/z values;
e) generating a spectrum based on the MS signals obtained in step b) and step d);
f) directing a fraction collector to collect fraction(s) each comprising a separated component based on the spectrum generated in step e);
wherein in step e), gradient signals t₁, t₂, t₃ etc. are subtracted from sample signals t'₁, t'₂, t'₃ etc. and resulting signals wherein (t' - t) ≥ 0 are used to generate a spectrum across a selected range of m/z values, and
wherein steps c) to f) may be repeated one or more times using gradient signals obtained in step b).

In step e), a total value of all intensities received may be used to create a total ion chromatogram (TIC). Alternatively, a selection of signals is used to create an extracted-ion chromatogram (XIC/EIC). As the skilled person will appreciate, resulting signals can never be negative, hence the criteria of (t'₁ - t₁) ≥ 0, (t'₂ - t₂) ≥ 0, (t'₃ - t₃) ≥ 0 etc. must be fulfilled.

The solvent gradient of step a), which will include a gradually changing ionic strength, will be easily defined by the skilled person in this area following well known principles in the area of chromatography, including considerations related e.g. to the refraction index of the sample, the packing of the column used etc. Examples of solvents commonly used in flash chromatography include ethyl acetate, hexane, dichloromethane, acetone etc.

Further, the gradient signals generated in step b) may be used as such as a linear gradient, in which case in step c), a solvent gradient defined according to step a) i.e. identical, or substantially identical to the defined gradient, is passed across the column.

Alternatively, in step c), only a part of the defined gradient may be used in a shorter linear gradient or in a non-linear gradient, such as a step-wise gradient.
The slope of the gradients used according to the invention may be anything from a steep gradient to a substantially flat gradient, depending on the intended separation.

The separation according to the invention may be liquid chromatography, such as FLASH chromatography. The chromatography column used may be any commercially available and conventionally packed column, such as a silica column in case of FLASH chromatography. The skilled person is able to select the appropriate materials and methods for an intended separation.

The sample may be applied to the column in advance or just before the separation, and it may be a dry sample, or a liquid sample. More specifically, the sample may be applied as neat, simply applied as is onto the column; in solution in a suitable solvent; or deposited dried sample. Chromatography columns are available which have allocated spaces of suitable size for such sample application.

The method according to the invention is advantageously used for combined identification and purification of substances and/or compounds. The present invention may be used in relation to any target which may successfully be subjected to mass spectrometry, such as organic molecules including nucleic acids and peptides of suitable sizes. As flash chromatography is commonly used in the detection of substances in biological samples, such as disease markers or drugs, the sample may originate from blood, urine, saliva etc.

As used in the present context, the term "automated" separation means that at least one step is automated. Advantageously, all steps are automated, and the method of the invention may be referred to as "fully automated". One or more steps of the present method may be controlled by a computer.

Thus, in a second aspect, the present invention relates to software i.e. a computer program, which may be provided on any suitable data carrier, and which is capable of executing at least one automated step of the present method, such as all steps. The invention also embraces a computer programmed to perform one or more steps of the method according to the invention.

A computer program according to the invention may comprise computer-executable instructions for causing a system to perform a method according to the invention.

Thus, more specifically, a computer program product is provided according to the present invention, which comprises a memory and/or a computer-readable storage medium, the computer-readable storage medium having the computer program described above embodied therein. The memory and/or computer-readable storage medium referred to herein may comprise of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

In a third aspect, the present invention relates to a system for performing automated mass-directed separation of two or more components of a sample, such as liquid chromatography, e.g. flash chromatography.

A system according to the invention may comprise a chromatography column, configured to hold any kind of chromatography packing, as discussed above. A system according to the invention may further comprise one or more containers configured to hold the appropriate solvent(s) for providing a liquid gradient of changing composition of said solvent(s). In order to facilitate the preparation of a liquid gradient of solvents, a system according to the invention may further comprise a selector configured to receive the solvent(s), and to pass on the appropriate proportions thereof to the column. The selector may e.g. be in the form of a manual valve or an actuator valve controllable by a control signal.

A system according to the invention may further be linked to, or comprise, a mass spectrometer (MS). As the skilled person will appreciate, the present invention may utilize any conventional mass spectrometer which is commonly used in combination with liquid chromatography, such as FLASH chromatography. The MS used according to the present invention may e.g. be a quadropole mass spectrometer.

The skilled person is also capable of combining the mass spectrometer with a conventional fraction collector in order to collect one or more targeted sample components, which according to the present invention will be obtained with higher purity than any of the prior art methods.

Thus, the present invention uses conventional elements linked to a conventional mass spectrometer, but suggests for the first time to reduce noise caused by solvents in the mass spectrometer by determining the noise level resulting from a specific gradient in a step preceding an actual separation of components of a sample. Differently worded, according to the present invention, a defined solvent gradient is subjected to mass spectrometry in a pre-run in order to define the signals it generates during mass spectroscopy. As such gradient signals would constitute noise if applied in a subsequent step for eluting targeted components from a chromatography column, gradient signals are proposed according to the invention to be subtracted from the sample signals obtained in a subsequent step of chromatography.

As the skilled person will appreciate, the pre-run according to the invention is used to obtain signals for the relevant concentrations used in a gradient, while there is no requirement for using the same flow rate in the pre-run as in a subsequent chromatography step. Thus, an advantage of the present pre-run is that it may be quicker than traditional 'calibration runs' performed on the relevant packed chromatography column.

As also appreciated by the skilled person, a pre-run according to the invention may run a gradient in either direction; either starting with the same composition as planned for a subsequent chromatography step, or, alternatively, by starting with the planned final composition and run until the planned starting composition is achieved.

As the skilled person will appreciate, a splitter type of valve may advantageously be used downstream of the column in order to combine an eluent from the column, or a liquid gradient which has bypassed the column, with conventional mass spectrometer solvent. The valve or splitter should be controllable by a control signal. An illustrative valve useful as a splitter device in the method and system according to the invention is described in US 5,803,117.

Thus, more specifically, the present invention may be a system for performing automated mass-directed separation of two or more components, which system comprises
i. a chromatography column;
ii. at least a first, and optionally a second container located upstream of said chromatography column and configured to hold one or more solvents;
iii. a selector configured to receive solvent at least from the first and optionally from a second container, and to direct a resulting solvent stream to the chromatography column;
iv. a mass spectrometer (MS) located downstream of said chromatography column;
v. an additional solvent container configured to hold an MS solvent;
vi. a splitter device configured to receive eluate flow from a point downstream of the chromatography column, and either to combine at least part of said eluate flow with MS solvent and to direct the eluent-solvent mixture to the MS; and/or to direct at least part of said eluent to a fraction collector for subsequent separation into separate collector units,
wherein a bypass loop is arranged to pass solvent from a point downstream of the selector via a valve into tubing downstream of the chromatography column but upstream of the splitter device.

A system according to the invention may further comprise a processor configured to (i) subtract a set of gradient signal, obtained when the downstream valve is set to direct solvent flow via the bypass loop towards the splitter device, which is set to combine said flow with MS solvent and to direct the combined flow to the MS, from a set of sample signals, obtained when the downstream valve is set to pass eluate exiting the chromatography column to the splitting device, which is set to direct at least a part of said eluate towards the MS and a part of said eluate to the fraction collector; and to (i) instruct the operation of said fraction collector based on a spectrum generated using the resulting signals.

More specifically, a control unit used according to the present invention may be an Electronic Control Unit (ECU) or an on-board computer. The present control unit may comprise a processor communicatively coupled to a transceiver for wired or wireless communication. In one example, the processor may be any one of a selection of processing circuitry and/or a central processing unit and/or processor modules and/or multiple processors configured to cooperate with each-other. Further, the control unit may advantageously comprise a memory. The memory may contain instructions executable by the processor to perform any one of the herein described or indicated methods. The processor may be communicatively coupled to a selection of any of the transceiver and the memory.

A system according to the invention is advantageously used for combined identification and purification of compounds, such as the ones discussed above.

## Claims

1. A method for automated mass-directed separation of two or more components of a sample by flash chromatography, which method comprises
a) defining a solvent gradient by its changing composition;
b) determining a solvent noise level by subjecting said solvent gradient to mass spectrometry (MS) and generating a plurality of gradient signals t₁, t₂, t₃ etc. across a predetermined range of m/z values;
c) separating two or more components of a sample by passing a solvent gradient which includes at least a part of the gradient defined according to step a) across a packed flash chromatography column to which the sample has been applied;
d) subjecting the eluent exiting said column to MS and generating a plurality of sample signals t'₁, t'₂, t'₃ etc. across a predetermined range of m/z values;
e) generating a spectrum based on the MS signals obtained in step b) and step d);
f) directing a fraction collector to collect fraction(s) each comprising a separated component based on the spectrum generated in step e);
wherein in step e), gradient signals t₁, t₂, t₃ etc. are subtracted from sample signals t'₁, t'₂, t'₃ etc. and resulting signals wherein (t' - t) ≥ 0 are used to generate a spectrum across a selected range of m/z values, and
wherein steps c) to f) may be repeated one or more times using gradient signals obtained in step b).

2. A method according to claim 1, wherein in step c), a solvent gradient defined according to step a) is passed across the column.

3. A method according to claim 1 or 2, wherein in step e), either a total value of all signals generated is used to create a total ion chromatogram (TIC), or, alternatively, a selection of signals is used to create an extracted-ion chromatogram (XIC/EIC).

4. A method according to any one of the preceding claims, wherein the chromatography column has been packed with silica.

5. A method according to any one of the preceding claims, wherein the solvent is selected from the group consisting of ethyl acetate, hexane, dichloromethane and acetone.

6. A method according to any one of the preceding steps, wherein the sample is a liquid sample, such as a biological sample, and at least one detected component is a vitamin or a hormone.

7. A method according to any one of the preceding steps, wherein at least one step is controlled by a computer.

8. A software for executing at least step e) of the method according to claim 7 provided on a data carrier.

9. A system for performing automated mass-directed separation of two or more components, which system comprises
i. a chromatography column;
ii. at least a first, and optionally a second container located upstream of said chromatography column and configured to hold one or more solvents;
a selector configured to receive solvent at least from the first and optionally a second container and to direct a resulting solvent flow to the chromatography column;
iii. a mass spectrometer (MS) located downstream of said chromatograph column;
iv. an additional solvent container configured to hold an MS solvent;
v. a splitter device configured to receive eluate downstream of the chromatography column, and either to combine said eluate with MS solvent and to pass the eluent-solvent mixture on to the MS; and/or to pass said eluent on to a fraction collector for subsequent separation into separate collector units,
wherein a bypass loop is arranged to pass solvent from a point downstream of the selector via a valve into tubing downstream of the chromatography column but upstream of the splitter device.

10. A system according to claim 9, further comprising a processor configured to (i) subtract a set of gradient signals, obtained when the downstream valve is set to transfer the flow from the bypass loop towards the splitter device, which is set to pass said flow on to the MS, from a set of sample signals, obtained when the downstream valve is set to pass the eluate exiting the chromatography column to the splitting device, which is set to split a part of said eluate towards the MS and a part of said eluate to the fraction collector; and to (i) instruct the operation of said fraction collector based on a spectrum generated using the resulting MS signals.

11. A system according to claim 9 or 10 for combined identification and purification of compounds, such as organic molecules, e.g. vitamins, hormones, drugs or drug candidates.
